# EUROPEAN PATENT APPLICATION

(11) **EP 4 763 769 A1**
(43) Date of publication of application: **24.06.2026**
(21) Application number: 25172824.2
(22) Date of filing: 28.04.2025
(51) Int. Cl.: B65H 3/48, B65H 7/14, G03G 15/00

(54) **RECORDING MEDIUM ACCOMMODATING DEVICE AND IMAGE FORMING APPARATUS**

(30) Priority: 20.12.2024 JP 2024225364
(71) Applicant: FUJIFILM Business Innovation Corp., Minato-ku Tokyo (JP)
(72) Inventor: HORIKAWA, Kazuhiko, Yokohama-shi, Kanagawa (JP)
(74) Representative: Becker Kurig & Partner Patentanwälte mbB

(57) **Abstract**

A recording medium accommodating device includes a one-side light source that is disposed on one lateral side of a loaded recording medium and that serves as a light source irradiating the recording medium with light, a one-side imaging unit that is disposed on the one lateral side and that serves as an imaging unit imaging the recording medium, an other-side light source that is disposed on the other lateral side of the loaded recording medium and that serves as a light source irradiating the recording medium with light, an other-side imaging unit that is disposed on the other lateral side and serves as an imaging unit imaging the recording medium, and a processor configured to set an intensity of light directed from the other-side light source to the recording medium in a case where the one-side imaging unit performs imaging to be lower than an intensity of light directed from the other-side light source to the recording medium in a case where the other-side imaging unit performs imaging.

## Description

### BACKGROUND OF THE INVENTION

### (i) Field of the Invention

The present invention relates to a recording medium accommodating device and an image forming apparatus.

### (ii) Description of Related Art

JP1993-306045A discloses a process in which air is ejected from a blowing nozzle onto a top of a stack of sheets, causing sheets to float, and the topmost sheet is suctioned by a suction foot and transported to a printing process.

JP2014-201413A discloses a paper feeding device that blows air onto a plurality of loaded sheets of paper to float the sheets of paper and that transports the floated topmost sheet of paper in one direction.

### SUMMARY OF THE INVENTION

In a case of imaging a loaded recording medium, an aspect is considered in which a plurality of imaging units are used to image the recording medium. Here, in a case where a light source is provided in a form corresponding to each of the imaging units, it is possible to increase an intensity of light emitted to the recording medium in a case where the recording medium is imaged by each of the imaging units.

Here, in a case where light emitted from a light source provided corresponding to one imaging unit is likely to reach another imaging unit, the quality of a captured image obtained by the other imaging unit may be deteriorated.

An object of the present disclosure is to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

According to a first aspect of the present disclosure, there is provided a recording medium accommodating device including a one-side light source that is disposed on one lateral side of a loaded recording medium and that serves as a light source for irradiating the recording medium with light, a one-side imaging unit that is disposed on the one lateral side and that serves as an imaging unit imaging the recording medium, an other-side light source that is disposed on the other lateral side of the loaded recording medium and that serves as a light source for irradiating the recording medium with light, an other-side imaging unit that is disposed on the other lateral side and serves as an imaging unit imaging the recording medium, and a processor configured to set an intensity of light directed from the other-side light source to the recording medium in a case where the one-side imaging unit performs imaging to be lower than an intensity of light directed from the other-side light source to the recording medium in a case where the other-side imaging unit performs imaging.

According to a second aspect of the present disclosure, in the recording medium accommodating device according to the first aspect, the processor may be configured to lower the intensity of the light directed from the other-side light source to the recording medium by turning off the other-side light source or reducing an output of the other-side light source.

According to a third aspect of the present disclosure, there is provided a recording medium accommodating device including a one-side light source that is disposed on one lateral side of a loaded recording medium and that serves as a light source for irradiating the recording medium with light, a one-side imaging unit that is disposed on the one lateral side and that serves as an imaging unit imaging the recording medium, an other-side light source that is disposed on the other lateral side of the loaded recording medium and that serves as a light source for irradiating the recording medium with light, and an other-side imaging unit that is disposed on the other lateral side and serves as an imaging unit imaging the recording medium, in which at least one of the one-side light source or the other-side light source is disposed in a state where an optical axis of the at least one of the one-side light source or the other-side light source is inclined with respect to a virtual straight line passing through the at least one of the one-side light source or the other-side light source and that is along a side of the loaded recording medium, the side extending from the one lateral side toward the other lateral side, and/or a wavelength of light emitted from the one-side light source is different from a wavelength of light emitted from the other-side light source.

According to a fourth aspect of the present disclosure, in the recording medium accommodating device according to the third aspect, in which the virtual straight line passing through the one-side light source may also pass through the other-side light source, and both the one-side light source and the other-side light source may be provided on a light source-passing straight line that is a common virtual straight line passing through both the one-side light source and the other-side light source.

According to a fifth aspect of the present disclosure, in the recording medium accommodating device according to the fourth aspect, both the one-side imaging unit and the other-side imaging unit may be disposed on one common virtual straight line along the side, and both the one-side imaging unit and the other-side imaging unit may be positioned on an imaging unit-passing straight line that is the one common virtual straight line passing through both the one-side imaging unit and the other-side imaging unit, in a case of comparing positions in a direction intersecting an extension direction of the imaging unit-passing straight line, a position of the imaging unit-passing straight line may be different from a position of the light source-passing straight line, and an optical axis of at least one of the one-side light source or the other-side light source may be inclined toward a side on which the imaging unit-passing straight line is positioned.

According to a sixth aspect of the present disclosure, in the recording medium accommodating device according to any one of the third to fifth aspects, at least one of the one-side light source or the other-side light source may be provided to face diagonally upward or diagonally downward.

According to a seventh aspect of the present disclosure, in the recording medium accommodating device according to the sixth aspect, on each of the one lateral side and the other lateral side, the light source may be provided above or below the imaging unit installed on each of the one lateral side and the other lateral side, and the light source provided above or below the imaging unit may be provided to face a side on which the imaging unit is positioned with respect to a horizontal plane passing through the virtual straight line passing through the light source.

According to an eighth aspect of the present disclosure, there is provided an image forming apparatus including a recording medium accommodating device that accommodates a recording medium, and an image forming section that forms an image on the recording medium fed out from the recording medium accommodating device, in which the recording medium accommodating device has a configuration of the recording medium accommodating device according to any one of the first to seventh aspects.

According to the first aspect of the present disclosure, it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

According to the second aspect of the present disclosure, it is possible to reduce the intensity of the light directed from the other-side light source to the one-side imaging unit by controlling the output of the other-side light source.

According to the third aspect of the present disclosure, it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

According to the fourth aspect of the present disclosure, it is easy to align conditions for irradiating the recording medium with light from the one-side light source and conditions for irradiating the recording medium with light from the other-side light source as compared with a case where neither the one-side light source nor the other-side light source is provided on the light source-passing straight line that is the common virtual straight line passing through both the one-side light source and the other-side light source.

According to the fifth aspect of the present disclosure, it is possible to improve the quality of a captured image obtained by each of a plurality of imaging units as compared with a case where the optical axis of the one-side light source and the optical axis of the other-side light source are along the extension direction of the imaging unit-passing straight line.

According to the sixth aspect of the present disclosure, it is possible to improve the quality of a captured image obtained by each of a plurality of imaging units as compared with a case where both the one-side light source and the other-side light source are provided to face a horizontal direction.

According to the seventh aspect of the present disclosure, it is possible to improve the quality of a captured image obtained by each of a plurality of imaging units as compared with a case where both the one-side light source and the other-side light source are provided to face the horizontal direction.

According to the eighth aspect of the present disclosure, it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

### BRIEF DESCRIPTION OF THE DRAWINGS

Exemplary embodiment(s) of the present invention will be described in detail based on the following figures, wherein:
Fig. 1 is a view showing an image forming apparatus;
Fig. 2 is a diagram showing a hardware configuration example of a control unit;
Fig. 3 is a perspective view of a paper accommodating device as seen from a front side of the image forming apparatus;
Fig. 4 is a view of the paper accommodating device as seen in a direction indicated by an arrow IV in Fig. 3;
Fig. 5 is a flowchart showing an example of a flow of processing executed in a case of setting blowing conditions;
Fig. 6 is a flowchart showing another example of a flow of processing executed in a case of setting blowing conditions;
Fig. 7 is a top view of the paper accommodating device;
Fig. 8 is a view of the paper accommodating device shown in Fig. 7 as seen in a direction indicated by an arrow VIII;
Fig. 9 is a diagram showing another configuration example of the paper accommodating device; and
Fig. 10 is a flowchart showing a flow of processing executed in a case where a content of a process is determined.

### DETAILED DESCRIPTION OF THE INVENTION

Hereinafter, an exemplary embodiment of the present invention will be described with reference to the accompanying drawings.

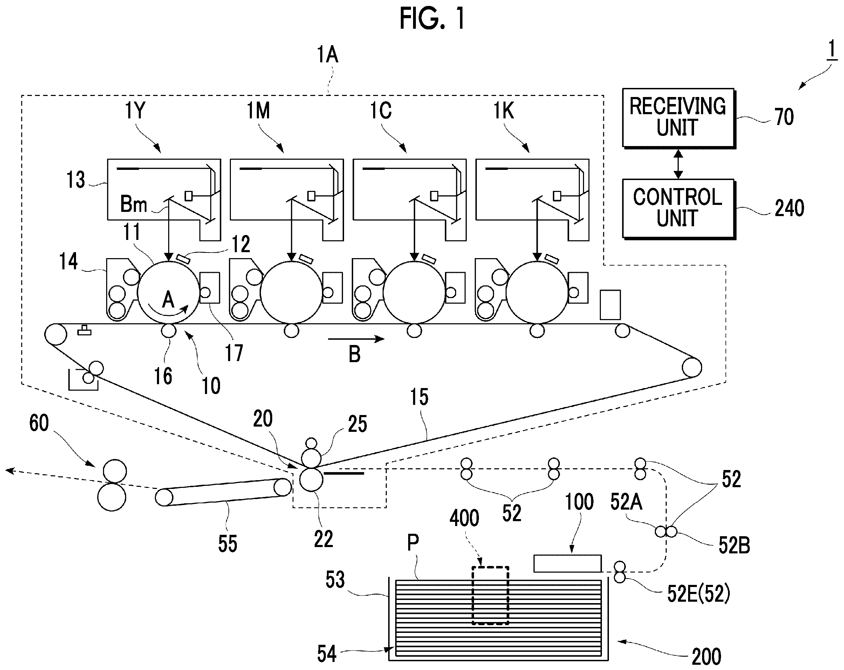

Fig. 1 is a diagram showing an image forming apparatus 1 according to the present exemplary embodiment.

The image forming apparatus 1 shown in Fig. 1 is an intermediate transfer type image forming apparatus called a tandem type. The image forming apparatus 1 is provided with a paper accommodating device 200 that accommodates paper P which is an example of a recording medium.

In addition, the image forming apparatus 1 is provided with an image forming section 1A. The image forming section 1A forms an image on the paper P fed out from the paper accommodating device 200.

The image forming section 1A is provided with a plurality of image forming units 1Y, 1M, 1C, and 1K. Each of the plurality of image forming units 1Y, 1M, 1C, and 1K uses an electrophotographic method to form a toner image of each color component.

In addition, the image forming section 1A is provided with a primary transfer unit 10. The toner images of the respective colors formed by the image forming units 1Y, 1M, 1C, and 1K are transferred onto an intermediate transfer belt 15 by the primary transfer unit 10.

In addition, the image forming section 1A is provided with a secondary transfer unit 20. The toner images transferred onto the intermediate transfer belt 15 are transferred onto the paper P by the secondary transfer unit 20.

In addition, the image forming apparatus 1 is also provided with a fixing device 60 that fixes, onto the paper P, the toner image secondarily transferred onto the paper P.

Further, the image forming apparatus 1 is provided with a control unit 240 that controls an operation of each unit of the image forming apparatus 1. In addition, the image forming apparatus 1 is provided with a receiving unit 70 that receives information input by a user.

The receiving unit 70 is configured by, for example, a touch panel. The receiving unit 70 has a reception function of receiving information from the user, as well as a display function of displaying the information.

A device for realizing the reception function and a device for realizing the display function may be individually provided.

### [Configuration of Control Unit 240]

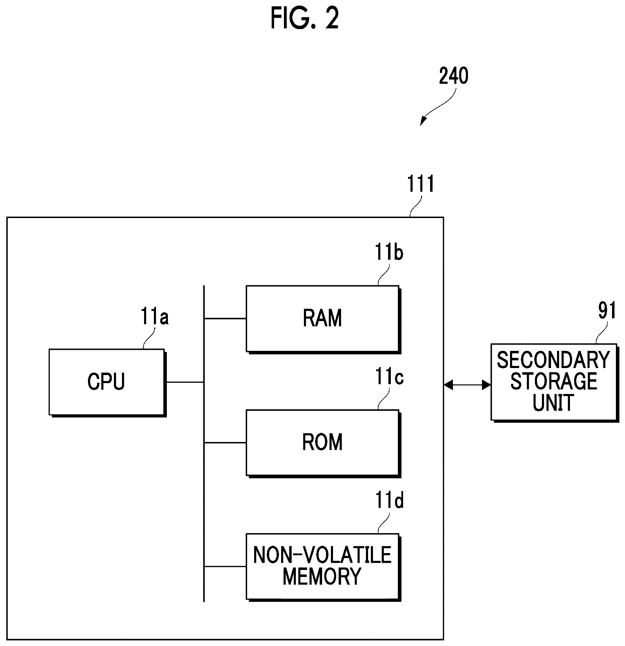

Fig. 2 is a diagram showing a hardware configuration example of the control unit 240. The control unit 240 is realized by a computer.

The control unit 240 includes an arithmetic processing unit 111 that executes digital arithmetic processing according to a program, and a secondary storage unit 91 that stores information.

The secondary storage unit 91 is realized, for example, by a known information storage device such as a hard disk drive (HDD), a semiconductor memory, or a magnetic tape.

The arithmetic processing unit 111 is provided with a CPU 11a which is an example of a processor.

In addition, the arithmetic processing unit 111 is provided with a RAM 11b that is used as a work memory or the like of the CPU 11a. In addition, the arithmetic processing unit 111 is provided with a ROM 11c in which a program and the like executed by the CPU 11a are stored.

In addition, the arithmetic processing unit 111 is provided with a non-volatile memory 11d that can hold data even in a case where power supply is interrupted.

The non-volatile memory 11d is configured by, for example, an SRAM or a flash memory that is backed up by a battery. The secondary storage unit 91 stores various types of information such as a program executed by the arithmetic processing unit 111.

In the present exemplary embodiment, the CPU 11a of the arithmetic processing unit 111 reads the program stored in the ROM 11c or the secondary storage unit 91. The CPU 11a executes the program stored in the ROM 11c or the secondary storage unit 91. As a result, various processes performed by the image forming apparatus 1 are executed. Various processes performed by the image forming apparatus 1 are executed by the CPU 11a.

The program executed by the CPU 11a can be provided to the image forming apparatus 1 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

In addition, the program executed by the CPU 11a may be provided to the image forming apparatus 1 by using communication means such as the Internet.

The image forming apparatus 1 will be further described with reference to Fig. 1.

The following devices are installed in each of the image forming units 1Y, 1M, 1C, and 1K.

First, a photoreceptor drum 11 that rotates in an arrow A direction is provided. A charging device 12 that charges the photoreceptor drum 11 is provided around the photoreceptor drum 11. Further, an exposure device 13 that forms an electrostatic latent image on the photoreceptor drum 11 is provided. Further, a developing device 14 that develops the electrostatic latent image on the photoreceptor drum 11 with a toner is provided.

In addition, each of the image forming units 1Y, 1M, 1C, and 1K is provided with a primary transfer roll 16. The primary transfer roll 16 is provided in the primary transfer unit 10. The toner image formed on the photoreceptor drum 11 is transferred onto the intermediate transfer belt 15 by the primary transfer roll 16.

In addition, each of the image forming units 1Y, 1M, 1C, and 1K is provided with a drum cleaner 17. The drum cleaner 17 removes residual toner remaining on the photoreceptor drum 11.

The intermediate transfer belt 15 circulates in an arrow B direction shown in Fig. 1 at a predetermined speed.

The primary transfer unit 10 includes the primary transfer roll 16 that is disposed to face the photoreceptor drum 11 with the intermediate transfer belt 15 interposed therebetween.

In the present exemplary embodiment, the toner images on the photoreceptor drums 11 are sequentially electrostatically attracted onto the intermediate transfer belt 15. As a result, a superimposed toner image is formed on the intermediate transfer belt 15.

The secondary transfer unit 20 includes a secondary transfer roll 22 and a backup roll 25 that are disposed to face an outer peripheral surface of the intermediate transfer belt 15.

The secondary transfer roll 22 is pressed against the backup roll 25 with the intermediate transfer belt 15 interposed therebetween. A voltage is applied between the secondary transfer roll 22 and the backup roll 25. In the present exemplary embodiment, the toner image on the intermediate transfer belt 15 is transferred onto the paper P transported to the secondary transfer unit 20.

In the present exemplary embodiment, the paper P fed out from the paper accommodating device 200 is transported to the secondary transfer unit 20. The toner image on the intermediate transfer belt 15 is transferred onto the paper P fed out from the paper accommodating device 200.

In the present exemplary embodiment, image data is output to the image forming apparatus 1 from an image reading device (not shown) or a personal computer (PC) or the like.

Then, this image data is subjected to image processing by an image processing device (not shown). As a result, image data for four colors Y, M, C, and K is generated. The generated image data is output to the exposure device 13 provided for each of the colors Y, M, C, and K.

The exposure device 13 irradiates the photoreceptor drum 11 with light in accordance with input image data.

The exposure device 13 uses, for example, a semiconductor laser to expose the photoreceptor drum 11. In addition, the exposure device 13 uses, for example, a light emitting diode (LED) to expose the photoreceptor drum 11.

A surface of each photoreceptor drum 11 is charged by the charging device 12. Thereafter, the surface is scanned and exposed by the exposure device 13, and an electrostatic latent image is formed on the surface.

Next, toner is adhered to the photoreceptor drum 11 by the developing device 14. As a result, a toner image is formed on the photoreceptor drum 11.

The toner image formed on the photoreceptor drum 11 is transferred onto the intermediate transfer belt 15 in the primary transfer unit 10.

After the toner image is transferred onto a surface of the intermediate transfer belt 15, the toner image is moved to the secondary transfer unit 20 by the moving intermediate transfer belt 15.

In the secondary transfer unit 20, the secondary transfer roll 22 is pressed against the backup roll 25 via the intermediate transfer belt 15.

In the present exemplary embodiment, the paper P fed out from the paper accommodating device 200 is sandwiched between the intermediate transfer belt 15 and the secondary transfer roll 22.

As a result, an unfixed toner image held on the intermediate transfer belt 15 is transferred onto the paper P by the secondary transfer unit 20. Thereafter, the paper P onto which the toner image is transferred passes through the fixing device 60 and is discharged to a paper discharge section (not shown).

### [Description of Paper Accommodating Device]

The paper accommodating device 200, which is an example of a recording medium accommodating device, is provided with an accommodating section 53 that accommodates the loaded paper P.

The accommodating section 53 is provided with a support base that supports the loaded paper P from below. The accommodating section 53 is also provided with a side guide against which a side of the paper P is abutted and which is used to position the paper P.

In the present exemplary embodiment, the topmost paper P among sheets of the paper P loaded in the paper accommodating device 200 is fed out.

In the present exemplary embodiment, a plurality of sheets of the paper P loaded in the paper accommodating device 200 constitute a paper bundle 54. The topmost paper P among sheets of the paper P contained in the paper bundle 54 is fed out.

Then, the toner image formed by the image forming section 1A is transferred onto the fed-out paper P by the secondary transfer unit 20.

Further, the paper accommodating device 200 is provided with a blowing device 400 that blows gas onto the paper P loaded in the paper accommodating device 200.

In addition, although not shown in Fig. 1, the paper accommodating device 200 is provided with a light source that irradiates the paper P with light. Further, the paper accommodating device 200 is provided with an imaging unit that images the paper P. The light source and the imaging unit will be described below.

In the present exemplary embodiment, gas is blown onto the loaded paper P by the blowing device 400, which is an example of a gas blowing unit. In the present exemplary embodiment, gas is blown onto the paper P from the lateral side of the loaded paper P.

As a result, in the present exemplary embodiment, the paper P is floated. Thereby, in the present exemplary embodiment, gas enters between sheets of the paper P. In a case where gas enters between sheets of the paper P, so-called double-feeding in which sheets of the paper P are fed out in a state where a plurality of sheets of the paper P overlap each other is less likely to occur.

In the present exemplary embodiment, the blowing device 400 is provided on both the front side and the back side of the paper bundle 54 shown in Fig. 1. In the present exemplary embodiment, gas is blown onto the paper P from both the front side and the back side.

In the present exemplary embodiment, air is blown as the gas. The type of gas is not particularly limited. Gas other than air may be blown onto the paper P.

In addition, the paper accommodating device 200 may be provided with a heater as a heat source. In this case, heated gas is blown onto the loaded paper P.

Further, in the present exemplary embodiment, a suction unit 100 that sucks sheets of the paper P constituting the paper bundle 54 is provided above the paper bundle 54.

Further, a plurality of transport rolls 52 that transport the paper P fed out from the paper accommodating device 200 are provided. The transport rolls 52 are provided downstream of the paper accommodating device 200 in a transport direction of the paper P.

In the present exemplary embodiment, the paper P fed out from the paper accommodating device 200 is first transported by a most upstream transport roll 52E. The term "most upstream transport roll 52E" refers to the transport roll 52 that is positioned most upstream in the transport direction of the paper P among the plurality of transport rolls 52.

The paper P is further transported by another transport roll 52 positioned downstream of the most upstream transport roll 52E. As a result, the paper P is directed to the secondary transfer unit 20 and the fixing device 60.

Further, a transport belt 55 is provided downstream of the secondary transfer roll 22 in the transport direction of the paper P. The transport belt 55 transports the paper P on which the secondary transfer is performed to the fixing device 60.

The suction unit 100 sucks and holds the topmost paper P among sheets of the paper P loaded in the paper accommodating device 200.

Then, the suction unit 100 moves toward the most upstream transport roll 52E in a state of holding the paper P. As a result, the paper P is delivered from the suction unit 100 to the most upstream transport roll 52E. As a result, the transport of the paper P is started by the most upstream transport roll 52E.

After delivering the paper P to the most upstream transport roll 52E, the suction unit 100 moves in a direction away from the most upstream transport roll 52E. This causes the suction unit 100 to return to an initial position.

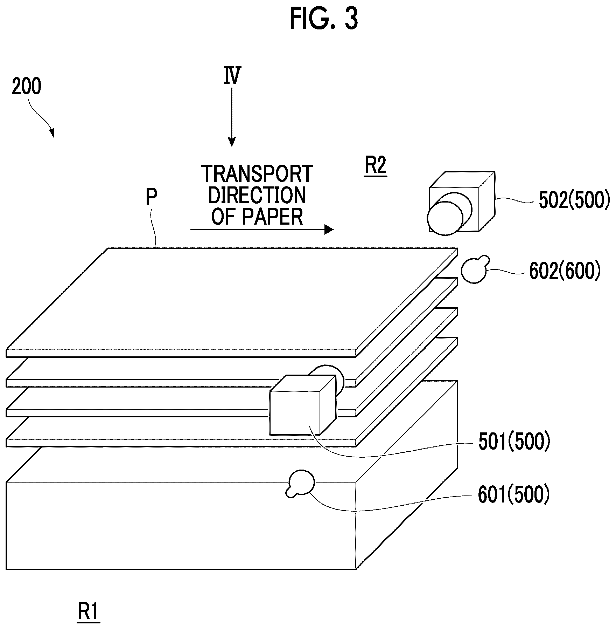

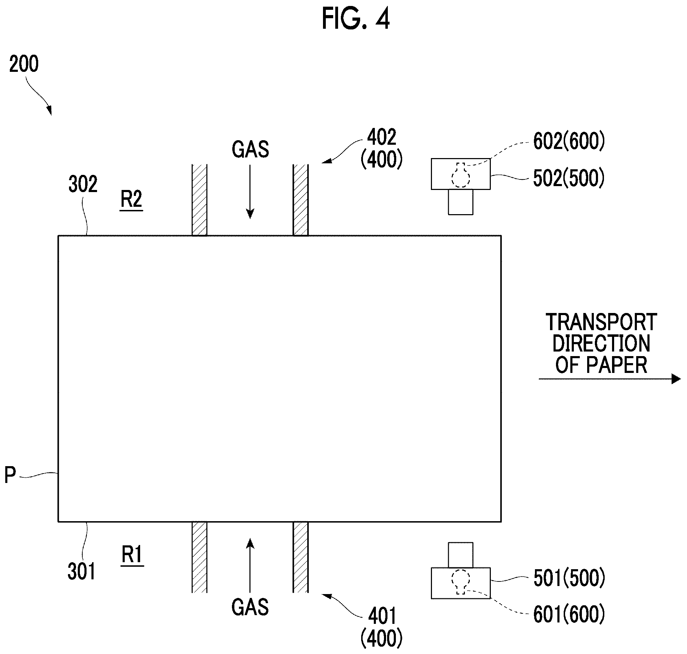

Fig. 3 is a perspective view of the paper accommodating device 200 as seen from a front side of the image forming apparatus 1. Fig. 4 is a view of the paper accommodating device 200 as seen in a direction indicated by an arrow IV in Fig. 3. In other words, Fig. 4 is a top view of the paper accommodating device 200.

Fig. 3 shows a state in a case where gas is blown by the blowing device 400. In Fig. 3, the blowing device 400 is not shown.

On the other hand, in Fig. 4, the blowing device 400 is displayed.

As shown in Fig. 4, in the present exemplary embodiment, a one-side blowing device 401 and an other-side blowing device 402 are provided as the blowing device 400.

The one-side blowing device 401 is provided on one lateral side R1 of the paper P. In addition, the other-side blowing device 402 is provided on the other lateral side R2 of the paper P.

The one lateral side R1 of the paper P refers to a lateral side of one side 301 of the rectangular paper P that is along in the transport direction of the paper P.

In addition, the other lateral side R2 of the paper P refers to a lateral side of the other side 302 of the rectangular paper P that is along the transport direction of the paper P.

In the present exemplary embodiment, the paper P is positioned between the one lateral side R1 and the other lateral side R2 opposite to the one lateral side R1.

In addition, in the present exemplary embodiment, as shown in Fig. 3, a one-side imaging unit 501 and an other-side imaging unit 502, which are imaging units 500 that image the paper P, are provided.

The one-side imaging unit 501 and the other-side imaging unit 502 are so-called cameras. The one-side imaging unit 501 and the other-side imaging unit 502 are configured of, for example, a CCD or a CMOS.

The one-side imaging unit 501 is disposed on the one lateral side R1. The other-side imaging unit 502 is disposed on the other lateral side R2.

Further, as shown in Fig. 3, a one-side light source 601, which is a light source 600, is provided on the one lateral side R1. The one-side light source 601 irradiates the paper P, which is imaged by the one-side imaging unit 501, with light.

In the present exemplary embodiment, in a case where the paper P is imaged by the one-side imaging unit 501, the one-side light source 601 is turned on.

In addition, in the present exemplary embodiment, as will be described below, in a case where the paper P is imaged by the one-side imaging unit 501, the other-side light source 602 is turned off or the output of the other-side light source 602 is reduced.

On the other lateral side R2, an other-side light source 602, which is a light source 600, is provided. The other-side light source 602 irradiates the paper P, which is imaged by the other-side imaging unit 502, with light.

In the present exemplary embodiment, in a case where the paper P is imaged by the other-side imaging unit 502, the other-side light source 602 is turned on.

In addition, in the present exemplary embodiment, as will be described below, in a case where the paper P is imaged by the other-side imaging unit 502, the one-side light source 601 is turned off or the output of the one-side light source 601 is reduced.

In the present exemplary embodiment, in a case where the paper P is imaged, the CPU 11a shown in Fig. 2 as an example of a processor controls the output of the light source 600.

Hereinafter, in the present specification, the intensity of light of light directed from the other-side light source 602 to the paper P will be referred to as "other-side light intensity". In addition, the intensity of the light directed from the one-side light source 601 to the paper P will be referred to as "one-side light intensity".

The CPU 11a turns on the one-side light source 601 in a case where the one-side imaging unit 501 shown in Fig. 3 performs imaging. In a case where the one-side imaging unit 501 performs imaging, the CPU 11a lowers the other-side light intensity.

In this case, in a case where the one-side imaging unit 501 performs imaging, the one-side light intensity is greater than the other-side light intensity.

The CPU 11a sets the other-side light intensity in a case where the one-side imaging unit 501 performs imaging to be smaller than the other-side light intensity in a case where the other-side imaging unit 502 performs imaging.

As a result, in a case where the one-side imaging unit 501 performs imaging, the intensity of light that acts as backlight with respect to the one-side imaging unit 501 is lowered. As a result, the quality of a captured image obtained by the one-side imaging unit 501 is improved.

In a case where light in the form of backlight is likely to reach the one-side imaging unit 501, flare or ghost is likely to occur due to the light. On the other hand, in the present exemplary embodiment, the intensity of the light in the form of backlight is reduced, and the flare or ghost is less likely to occur.

In addition, in a case where the other-side light intensity is not lowered in a case where the one-side imaging unit 501 performs imaging, an object other than the paper P is likely to appear in the captured image obtained by the one-side imaging unit 501. On the other hand, as in the present exemplary embodiment, in a case where the other-side light intensity is lowered, an object other than the paper P is less likely to appear in the captured image obtained by the one-side imaging unit 501.

In a case where the one-side imaging unit 501 performs imaging, the CPU 11a turns off the other-side light source 602 or reduces the output of the other-side light source 602. As a result, the other-side light intensity is lowered.

In this case, as described above, in a case where the one-side imaging unit 501 performs imaging, the intensity of light that acts as backlight with respect to the one-side imaging unit 501 is reduced.

The same process is performed even in a case where the other-side imaging unit 502 performs imaging.

In a case where the other-side imaging unit 502 performs imaging, the CPU 11a turns on the other-side light source 602. In a case where the other-side imaging unit 502 performs imaging, the CPU 11a lowers the one-side light intensity.

In a case where the other-side imaging unit 502 performs imaging, the other-side light intensity is greater than the one-side light intensity.

The CPU 11a sets the one-side light intensity in a case where the other-side imaging unit 502 performs imaging to be smaller than the one-side light intensity in a case where the one-side imaging unit 501 performs imaging.

As a result, in a case where the other-side imaging unit 502 performs imaging, the intensity of light that acts as backlight with respect to the other-side imaging unit 502 is reduced. As a result, the quality of a captured image obtained by the other-side imaging unit 502 is improved.

The method of reducing the intensity of the light in the form of backlight is not limited to the method of controlling the output of the light source 600.

For example, the intensity of the light in the form of backlight may be reduced by positioning a shielding member that shields light at a position facing the one-side light source 601 or the other-side light source 602.

**In** other words, the intensity of the light in the form of backlight may be reduced by positioning the shielding member between the one-side light source 601 and the paper P. **In** addition, the intensity of the light in the form of backlight may be reduced by positioning the shielding member between the other-side light source 602 and the paper P.

For example, the intensity of the light in the form of backlight may be reduced by changing the orientation of the one-side light source 601 or the other-side light source 602. Specifically, the intensity of the light in the form of backlight may be reduced by rotating the one-side light source 601 or the other-side light source 602 at 90° or 180°.

A process of positioning the shielding member at the position facing the one-side light source 601 or the other-side light source 602 will be described.

In a case where the shielding member is used, in a case where the one-side imaging unit 501 performs imaging, the shielding member provided corresponding to the other-side light source 602 is positioned at the position facing the other-side light source 602.

In a case where the one-side imaging unit 501 performs imaging, the shielding member provided corresponding to the one-side light source 601 is removed from the position facing the one-side light source 601.

In a case where the other-side imaging unit 502 performs imaging, the shielding member provided corresponding to the one-side light source 601 is positioned at the position facing the one-side light source 601.

In addition, in a case where the other-side imaging unit 502 performs imaging, the shielding member provided corresponding to the other-side light source 602 is removed from the position facing the other-side light source 602.

The movement of the shielding member to the position facing the light source 600 need only be performed by using a known mechanism having a drive source such as a motor. In addition, the movement of the shielding member to a position away from the facing position need only be performed by using a known mechanism having a drive source such as a motor.

Next, a process of changing the orientation of the one-side light source 601 or the other-side light source 602 will be described.

On the other hand, in a case where the one-side imaging unit 501 performs imaging, the one-side light source 601 faces the paper P side. In a case where the one-side imaging unit 501 performs imaging, the other-side light source 602 is rotated by 90° or 180°. As a result, the other-side light source 602 faces a side different from the side where the paper P is positioned.

In a case where the other-side imaging unit 502 performs imaging, the other-side light source 602 faces the paper P side. In a case where the other-side imaging unit 502 performs imaging, the one-side light source 601 is rotated by 90° or 180°. As a result, the one-side light source 601 faces a side different from the side where the paper P is positioned.

The light source 600 need only be rotated by using a known mechanism having a drive source such as a motor.

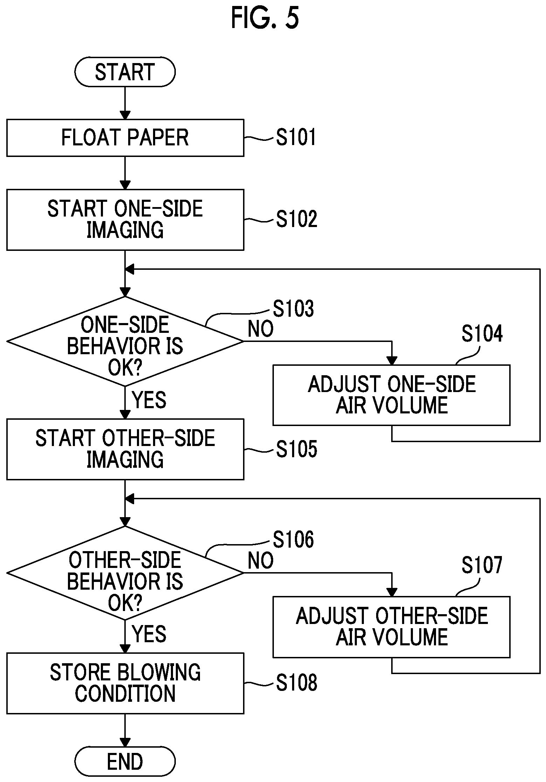

Fig. 5 is a flowchart showing an example of a flow of processing executed in a case of setting blowing conditions.

In the present exemplary embodiment, the following processing is performed to set blowing conditions, which are conditions for blowing gas onto the paper P by the blowing device 400.

In the present exemplary embodiment, first, the CPU 11a performs a process of floating the paper P (step S101). The CPU 11a operates the one-side blowing device 401 and the other-side blowing device 402 to float the paper P.

Thereafter, the CPU 11a starts the imaging by the one-side imaging unit 501 (step S102). In this case, the CPU 11a turns on the one-side light source 601 as described above. In addition, in this case, the CPU 11a lowers the other-side light intensity.

Next, the CPU 11a determines the behavior of the paper P on one side (step S103). The CPU 11a determines the behavior of the paper P on one side based on the captured image obtained by the one-side imaging unit 501.

In a case where it is determined that the behavior of the paper P on one side does not satisfy a predetermined condition, the CPU 11a adjusts the air volume of the one-side blowing device 401 (step S104).

The CPU 11a again determines the behavior of the paper P on one side in step S103.

In a case where it is determined in step S103 that the behavior of the paper P on one side satisfies the predetermined condition, the CPU 11a starts the imaging by the other-side imaging unit 502 (step S105).

In this case, the CPU 11a turns on the other-side light source 602 as described above. In addition, in this case, the CPU 11a lowers the one-side light intensity.

Next, the CPU 11a determines the behavior of the paper P on the other side (step S106). The CPU 11a determines the behavior of the paper P on the other side based on the captured image obtained by the other-side imaging unit 502.

In a case where it is determined that the behavior of the paper P on the other side does not satisfy a predetermined condition, the CPU 11a adjusts the air volume of the other-side blowing device 402 (step S107). The CPU 11a again determines the behavior of the paper P on the other side in step S106.

In a case where the CPU 11a determines that the behavior of the paper P on the other side satisfies the predetermined condition, the processing proceeds to the process of step S108.

In a case where it is determined in step S106 that the behavior of the paper P on the other side satisfies the predetermined condition, the blowing of the gas by the one-side blowing device 401 and the blowing of the gas by the other-side blowing device 402 are temporarily ended.

The blowing of the gas may be continued without being ended.

The blowing of the gas may be continued without being ended until the actual image forming processing on the paper P is started.

The processes of step S101 to step S106 are performed in a preparation stage before the actual image forming processing is started.

In step S108, the CPU 11a stores the blowing conditions in the secondary storage unit 91 shown in Fig. 2.

Specifically, the CPU 11a stores, in the secondary storage unit 91, the blowing conditions in a case where the behavior of the paper P on one side satisfies the above predetermined condition.

In addition, the CPU 11a stores, in the secondary storage unit 91, the blowing conditions in a case where the behavior of the paper P on the other side satisfies the above predetermined condition.

As described above, the process of setting the blowing conditions is ended.

Thereafter, formation of an image on the paper P is started in response to an instruction or the like from the user.

In a case where the formation of the image on the paper P is started, the CPU 11a reads and acquires the above blowing conditions stored in the secondary storage unit 91.

The CPU 11a controls the one-side blowing device 401 and the other-side blowing device 402 based on the blowing conditions.

In this case, the one-side blowing device 401 and the other-side blowing device 402 operate in accordance with the blowing conditions obtained by the processes of step S101 to step S108.

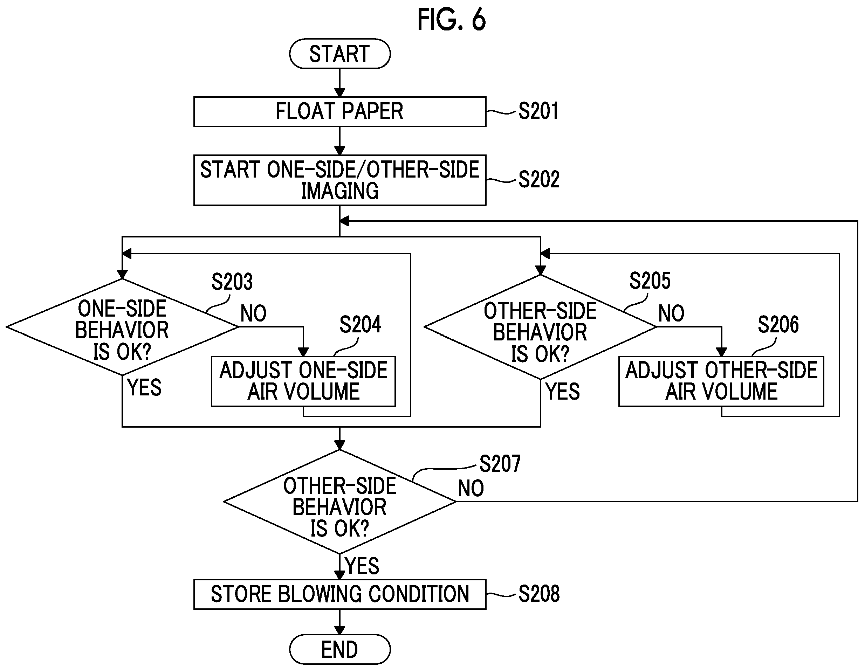

Fig. 6 is a flowchart showing another example of a flow of processing executed in a case of setting blowing conditions.

The processing is not limited to that shown in Fig. 5, but the processing shown in Fig. 6 may be executed.

In the processing shown in Fig. 6, the processing on one side and the processing on the other side are performed in parallel.

Specifically, first, the CPU 11a performs a process of floating the paper P (step S201) as in the above.

Next, the CPU 11a starts the imaging by the one-side imaging unit 501, and also starts the imaging by the other-side imaging unit 502 (step S202).

Thereafter, the CPU 11a performs the processes of step S203 and step S204 and the processes of step S205 and step S206 in parallel.

The processes of step S203 and step S204 are the same as the processes of step S103 and step S104. In the processes of step S203 and step S204, the determination of the behavior of the paper P and the adjustment of the air volume of the one-side blowing device 401 are repeatedly performed.

In addition, the processes of step S205 and step S206 in Fig. 6 are the same as the processes of step S106 and step S107. In the processes of step S205 and step S206, the determination of the behavior of the paper P and the adjustment of the air volume of the other-side blowing device 402 are repeatedly performed.

Further, in this processing shown in Fig. 6, the process of step S207 is performed every time a predetermined time elapses.

In the process of step S207, the CPU 11a determines whether or not the behavior of the paper P on both the one side and the other side satisfies a predetermined condition.

In the processing shown in Fig. 6, processing for causing the behavior of the paper P to satisfy a predetermined condition is repeatedly performed in step S203 and step S204, and step S205 and step S206.

In step S207, it is determined whether or not the behavior of the paper P on both the one side and the other side satisfies a predetermined condition.

In a case where the CPU 11a determines that the predetermined condition is satisfied for both, the processing proceeds to the process of step S208.

In step S207, in a case where the CPU 11a determines that the behavior of the paper P on one side satisfies the predetermined condition and the behavior of the paper P on the other side satisfies the predetermined condition, the processing proceeds to step S208.

On the other hand, in a case where the CPU 11a does not determine in step S207 that the predetermined condition is satisfied, the processes of step S203 and step S204 and the processes of step S205 and step S206 are continuously performed.

Further, the process of step S207 is performed again.

In step S208, similarly to step S108, the CPU 11a stores, in the secondary storage unit 91, the blowing condition in a case where the behavior of the paper P on one side satisfies the predetermined condition.

In addition, in step S208, the CPU 11a stores, in the secondary storage unit 91, the blowing conditions in a case where the behavior of the paper P on the other side satisfies the predetermined condition.

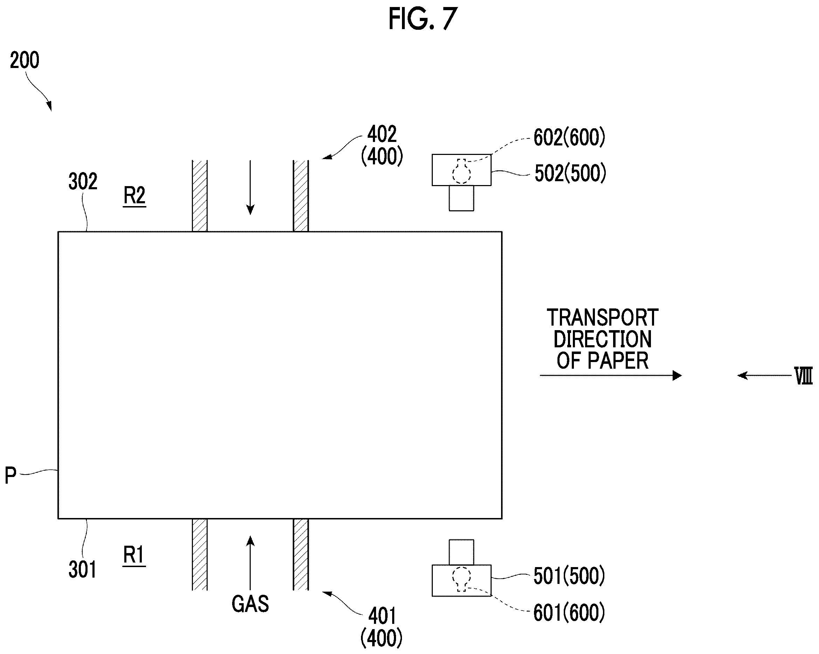

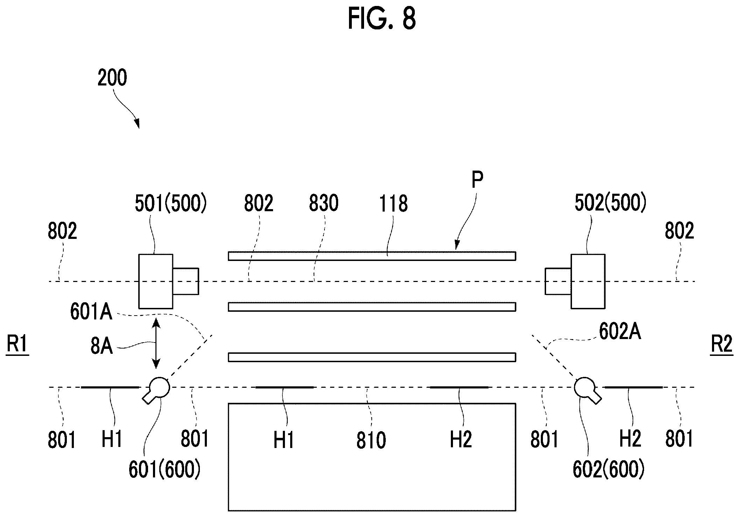

Figs. 7 and 8 are views showing another configuration example of the paper accommodating device 200.

Fig. 7 is a top view of the paper accommodating device 200.

Fig. 8 is a view of the paper accommodating device 200 shown in Fig. 7 as seen in a direction indicated by an arrow VIII. In other words, Fig. 8 is a view of the paper accommodating device 200 as seen from the downstream side in the transport direction of the paper P with respect to the paper accommodating device 200.

As shown in Fig. 8, in this configuration example, each of the one-side light source 601 and the other-side light source 602 is provided to face obliquely upward.

The light source 600 is provided below the imaging unit 500 on each of the one lateral side R1 and the other lateral side R2.

In the present exemplary embodiment, the one-side light source 601 is provided below the one-side imaging unit 501. In addition, the other-side light source 602 is provided below the other-side imaging unit 502.

In this configuration example, the one-side light source 601 is disposed in a state where an optical axis 601A of the one-side light source 601 is inclined.

The one-side light source 601 is disposed in a state where the optical axis 601A of the one-side light source 601 is inclined with respect to a virtual straight line 801 passing through the one-side light source 601.

The term "virtual straight line 801" refers to a virtual straight line 801 along a side 118 of the paper P. The paper P is formed in a rectangular shape and has a side 118 extending from the one lateral side R1 to the other lateral side R2.

The virtual straight line 801 is a straight line along the side 118.

In this configuration example, the other-side light source 602 is also disposed in a state where an optical axis 602A of the other-side light source 602 is inclined. The other-side light source 602 is also disposed in a state where the optical axis 602A of the other-side light source 602 is inclined with respect to a virtual straight line 801 passing through the other-side light source 602.

In the present exemplary embodiment, the optical axes of both the one-side light source 601 and the other-side light source 602 are disposed in a state of being inclined with respect to the virtual straight line 801.

The present invention is not limited to this, and the optical axis of only one light source 600 out of the one-side light source 601 and the other-side light source 602 may be inclined with respect to the virtual straight line 801. In this case, the optical axis of the other light source 600 is along the virtual straight line 801.

Here, a horizontal plane H1 passing through the virtual straight line 801 passing through the one-side light source 601 is assumed. In the present exemplary embodiment, the one-side imaging unit 501 is positioned above the horizontal plane H1.

The one-side light source 601 provided below the one-side imaging unit 501 is provided to face a side on which the one-side imaging unit 501 is positioned with respect to the horizontal plane H1.

In addition, a horizontal plane H2 passing through the virtual straight line 801 passing through the other-side light source 602 is assumed. In the present exemplary embodiment, the other-side imaging unit 502 is positioned above the horizontal plane H2.

The other-side light source 602 provided below the other-side imaging unit 502 is also provided to face a side on which the other-side imaging unit 502 is positioned with respect to the horizontal plane H2.

Each of the two light sources 600 may be provided above the imaging unit 500 disposed on the same side as the light source 600.

That is, the one-side light source 601 may be provided above the one-side imaging unit 501. In addition, the other-side light source 602 may be provided above the other-side imaging unit 502.

In addition, one light source 600 of the two light sources 600 may be disposed above the imaging unit 500 disposed on the same side as the one light source 600, and the other light source 600 may be disposed below the imaging unit 500 disposed on the same side as the other light source 600.

In a case where the light source 600 is provided above the imaging unit 500, the light source 600 is disposed such that the light source 600 faces diagonally downward. In this case as well, the light source 600 is provided to face the side on which the imaging unit 500 is positioned with respect to a horizontal plane passing through a virtual straight line 801 passing through the light source 600.

In this configuration example shown in Fig. 8, the virtual straight line 801 passing through the one-side light source 601 also passes through the other-side light source 602.

In this configuration example, the common virtual straight line 801 passes through both the one-side light source 601 and the other-side light source 602. In this configuration example, both the one-side light source 601 and the other-side light source 602 are positioned on the common virtual straight line 801.

Hereinafter, in the present specification, the common virtual straight line 801 passing through both the one-side light source 601 and the other-side light source 602 will be referred to as a "light source-passing straight line 810".

Further, here, another common virtual straight line 802 along the side 118 is assumed. In this configuration example, both the one-side imaging unit 501 and the other-side imaging unit 502 are positioned on the other common virtual straight line 802.

Hereinafter, in the present specification, the common virtual straight line 802 passing through both the one-side imaging unit 501 and the other-side imaging unit 502 will be referred to as an "imaging unit-passing straight line 830".

In this configuration example, both the one-side imaging unit 501 and the other-side imaging unit 502 are positioned on the imaging unit-passing straight line 830 passing through both the one-side imaging unit 501 and the other-side imaging unit 502.

Here, positions in an intersection direction, which is a direction intersecting an extension direction of the imaging unit-passing straight line 830, are compared. In the present exemplary embodiment, in Fig. 8, the intersection direction is indicated by an arrow indicated by reference sign 8A.

In this configuration example, the position of the imaging unit-passing straight line 830 is different from the position of the light source-passing straight line 810 in the intersection direction.

In this configuration example, the optical axis 601A of the one-side light source 601 and the optical axis 602A of the other-side light source 602 are inclined toward a side on which the imaging unit-passing straight line 830 is positioned.

As described above, the optical axis of only one light source 600 out of the one-side light source 601 and the other-side light source 602, may be inclined. The optical axis of the other light source 600 may be along the light source-passing straight line 810.

In this case, only the optical axis of the one light source 600 is inclined toward the side on which the imaging unit-passing straight line 830 is positioned.

In addition, as described above, at least one light source 600 may be disposed above the imaging unit 500 disposed on the same side as the one light source 600.

In this case as well, the optical axis of the at least one light source 600 is inclined toward the side on which the imaging unit-passing straight line 830 is positioned.

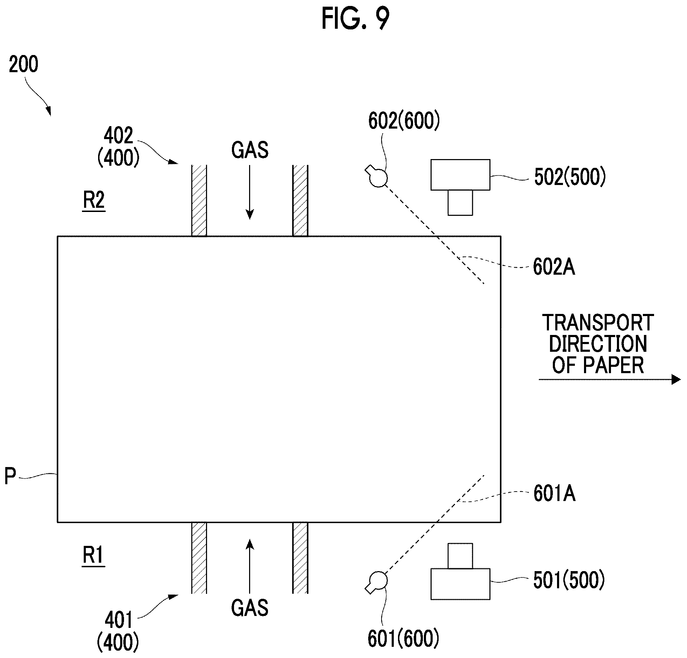

Fig. 9 is a diagram showing another configuration example of the paper accommodating device 200. Fig. 9 shows the paper accommodating device 200 as seen from above.

In this configuration example, similarly to the above, the one-side light source 601 is disposed in a state where an optical axis 601A of the one-side light source 601 is inclined. In addition, the other-side light source 602 is also disposed in a state where an optical axis 602A of the other-side light source 602 is inclined.

In this configuration example, the position of the one-side light source 601 is different from the position of the one-side imaging unit 501 in the transport direction of the paper P. In addition, the position of the other-side light source 602 is different from the position of the other-side imaging unit 502 in the transport direction of the paper P.

In this configuration example, each of the light sources 600 is provided upstream of the imaging unit 500 in the transport direction of the paper P. In this configuration example, each of the light sources 600 is inclined to face the downstream side in the transport direction of the paper P.

In this configuration example as well, the backlight is less likely to be directed to the imaging unit 500 positioned on a side opposite to the side on which one light source 600 is positioned.

Each of the light sources 600 may be provided downstream of the imaging unit 500. Each of the light sources 600 may be inclined to face the upstream side in the transport direction of the paper P.

In addition, one light source 600 may be provided upstream of the imaging unit 500 and inclined to face the downstream side in the transport direction of the paper P. In addition, the other light source 600 may be provided downstream of the imaging unit 500 and inclined to face the upstream side in the transport direction of the paper P.

Further, the configuration shown in Fig. 8 and the configuration shown in Fig. 9 may be combined.

In this case, one or both of the two light sources 600 face either upward or downward, and face either the downstream side or the upstream side in the transport direction of the paper P.

In addition, a wavelength of the light emitted from the one-side light source 601 and a wavelength of the light emitted from the other-side light source 602 may be made different.

In this case, the deterioration in the quality of the captured image obtained by each of the imaging units 500 can be suppressed without adopting the above process of reducing the output of the light source 600 or the above configuration of inclining the optical axis of the light source 600.

The wavelength of the light emitted from the one-side light source 601 and the wavelength of the light emitted from the other-side light source 602 may be made different while the above-described process of reducing the output of the light source 600 is adopted.

In addition, the wavelength of the light emitted from the one-side light source 601 and the wavelength of the light emitted from the other-side light source 602 may be made different while the above-described configuration of inclining the optical axis of the light source 600 is adopted.

In a case where the wavelength of the light emitted from the one-side light source 601 is different from the wavelength of the light emitted from the other-side light source 602, a filter is provided.

Specifically, a filter that transmits light of a specific wavelength and does not transmit light of another specific wavelength is provided in each of the one-side imaging unit 501 and the other-side imaging unit 502.

More specifically, a filter is provided on an optical path of reflected light directed toward a light receiving element (not shown) provided in each of the one-side imaging unit 501 and the other-side imaging unit 502.

As a result of the irradiation of the paper P with the light from the light source 600, reflected light is generated from the paper P. A filter is provided on an optical path along which this reflected light passes as it travels toward the light receiving element provided in the light source 600.

More specifically, a filter that transmits light emitted from the one-side light source 601 and does not transmit light emitted from the other-side light source 602 is provided in the one-side imaging unit 501.

In addition, a filter that transmits light emitted from the other-side light source 602 and does not transmit light emitted from the one-side light source 601 is provided in the other-side imaging unit 502.

In this case, the influence of the other-side light source 602 on the captured image obtained by the one-side imaging unit 501 is reduced. In addition, in this case, the influence of the one-side light source 601 on the captured image obtained by the other-side imaging unit 502 is reduced.

### [Process of Setting Imaging Condition]

Next, a process of setting imaging conditions will be described.

In addition, the CPU 11a may set imaging conditions in a case where the paper P is imaged by the imaging unit 500, based on paper information that is information on the loaded paper P.

In the present exemplary embodiment, for example, the floating paper P is imaged as shown in step S102 or step S105.

In this imaging, imaging conditions in a case where the imaging is performed may be set based on paper information that is information on the paper P to be imaged.

Hereinafter, a process of setting imaging conditions in a case where imaging is performed using the one-side imaging unit 501 will be described. A process of setting imaging conditions in a case where imaging is performing using the other-side imaging unit 502 is the same as the setting process on one side.

The CPU 11a performs setting for the one-side light source 601, for example, as the setting of the imaging conditions based on the paper information. Specifically, the CPU 11a performs setting for the output of the one-side light source 601 based on the paper information.

In the present exemplary embodiment, the CPU 11a acquires, for example, color information that is information on a color of the paper P loaded in the paper accommodating device 200 as the paper information.

The CPU 11a sets the imaging conditions based on the color information.

This color information is input by, for example, the user. The CPU 11a acquires color information that is information on a color of the paper P based on the information input by the user.

The user inputs information on the color of the paper P, such as information indicating whether the color of the paper P is white or black.

The color information is input by the user via the receiving unit 70 shown in Fig. 1, for example. In addition, the color information is input by the user, for example, via a terminal device such as a PC owned by the user.

The CPU 11a receives information from the receiving unit 70 or the terminal device and acquires the color information.

In addition, the paper accommodating device 200 may be provided with a sensor, and the color information of the paper P may be acquired by using the sensor. In this case, the CPU 11a receives information from the sensor and acquires the color information.

In a case where the color specified by the color information is a color other than white, such as black, gray, or blue, the CPU 11a increases the output of the one-side light source 601 as compared with a case where the color specified by the color information is white.

In a case where the color specified by the color information is a color other than white, the paper P is less likely to appear in the captured image obtained by the one-side imaging unit 501 as compared with a case where the color is white. In this case, the accuracy of specifying the state of the floating paper P is likely to decrease.

On the other hand, in a case where the output of the one-side light source 601 is increased, the paper P is likely to appear in the captured image obtained by the one-side imaging unit 501. In this case, the deterioration of the accuracy of specifying the state of the paper P is suppressed.

In addition, as the setting of the imaging conditions, for example, the setting for the one-side imaging unit 501 shown in Fig. 3 or the like may be performed.

In a case of the setting for the one-side imaging unit 501, the CPU 11a changes, for example, the exposure time in the one-side imaging unit 501. In addition, the CPU 11a changes, for example, the aperture of the one-side imaging unit 501 or the ISO sensitivity of the one-side imaging unit 501.

Specifically, in a case where the color specified by the color information is a color other than white, the CPU 11a lengthens the exposure time in the one-side imaging unit 501 as compared with a case where the color specified by the color information is white. In addition, in this case, the CPU 11a opens the aperture of the one-side imaging unit 501 or increases the ISO sensitivity of the one-side imaging unit 501, for example.

In the above description, as an example of the paper information, a case of acquiring the color information of the paper P has been described as an example. The present invention is not limited to this, and, as the paper information, information on the paper type may be acquired.

The information on the paper type is also input by the user in the same manner as described above. Alternatively, the information on the paper type is acquired by a sensor.

In a case of acquiring the information on the paper type, for example, information indicating whether or not the paper P is plain paper or information indicating whether or not the paper P is an OHP sheet is acquired. The OHP sheet refers to a transparent sheet used for an overhead projector.

Even in a case where the setting of the imaging conditions is performed based on the information on the paper type, the deterioration in the quality of the captured image is suppressed.

In a case where the paper type specified by the information on the paper type is an OHP sheet, the CPU 11a increases the output of the one-side light source 601 as compared with a case where the paper type is plain paper.

Alternatively, in this case, the CPU 11a lengthens the exposure time in the one-side imaging unit 501. Alternatively, in this case, the CPU 11a opens the aperture of the one-side imaging unit 501 or increases the ISO sensitivity of the one-side imaging unit 501.

In this case, the OHP sheet is likely to appear in the captured image obtained by the one-side imaging unit 501.

### [Determination of Content of Process for Setting of Blowing Condition]

In addition, the CPU 11a may determine the content of a process performed in a case where blowing conditions of gas are set based on the paper information.

In step S101 to step S108 shown in Fig. 5, as the process performed in a case of setting the blowing conditions, the process of actually blowing gas onto the paper P and then setting the blowing conditions has been described.

The content of the process may be determined based on the paper information without uniformly performing the above-described process.

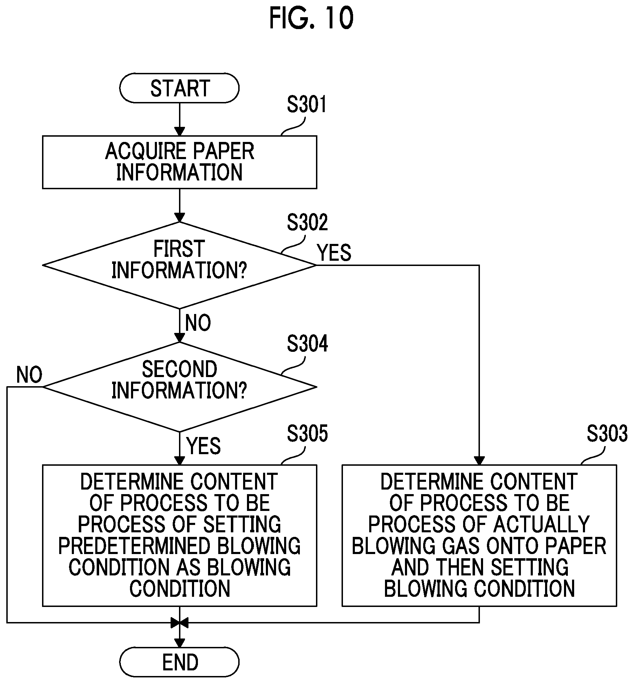

Fig. 10 is a flowchart showing a flow of processing executed in a case where the content of the process is determined.

In a case where the content of the process is determined based on the paper information, first, an acquisition unit acquires the paper information that is information on the paper P loaded in the paper accommodating device 200 (step S301).

Examples of the acquisition unit include the receiving unit 70 described above. In addition, examples of the acquisition unit include the sensor described above.

In addition, a case where the paper information is input by a terminal device such as a PC is also assumed. In this case, a receiving unit (not shown) provided in the image forming apparatus 1 corresponds to the acquisition unit that acquires the paper information.

In the process, the CPU 11a determines whether the information specified by the paper information is predetermined first information (S302).

In step S302, in a case where it is determined that the information specified by the paper information is the predetermined first information, the processing proceeds to step S303.

In step S303, the CPU 11a determines the content of the process to be a process of actually blowing gas onto the paper P by the blowing device 400 and then setting the blowing conditions (S303).

In this case, the processing shown in Fig. 5 or 6 is executed. That is, a process of actually blowing gas onto the paper P and then setting the blowing conditions is executed.

Here, examples of the first information include information indicating that the color of the paper P is white and information indicating that the type of the paper P is plain paper.

In step S302, in a case where it is not determined that the information specified by the paper information is the first information, the processing proceeds to step S304.

In step S304, the CPU 11a determines whether the information specified by the paper information is predetermined second information.

In step S304, in a case where it is determined that the information specified by the paper information is the predetermined second information, the processing proceeds to step S305.

In step S305, the CPU 11a determines the content of the process to be a process of setting the predetermined blowing condition as the blowing condition. In other words, in this case, the CPU 11a determines the content of the process to be a process of setting the predetermined blowing condition as the blowing condition used in the formation of the image.

In a case where it is not determined in step S304 that the information specified by the paper information is the second information, a predetermined notification such as a notification indicating error occurrence is given to the user, and then the processing ends.

In a case where the process of step S305 is executed, the predetermined blowing condition is set as the blowing condition used in the formation of the image without actually blowing gas. In this case, predetermined default conditions are set as the blowing conditions used in the formation of the image. In other words, in this case, a fixed value prepared in advance is set as the blowing condition used in the formation of the image.

Examples of the second information include information indicating that the color of the paper P is a color other than white and information indicating that the type of the paper P is an OHP sheet.

In a case where the process of step S305 is executed, the blowing conditions are set without blowing gas onto the paper P and without performing imaging by the imaging unit 500.

In other words, in this case, the processing shown in Fig. 5 or 6 is not performed, and the blowing conditions are set.

In a case where the content of the process performed in a case of setting the blowing conditions is determined based on the paper information, for example, the paper information is acquired before step S101 shown in Fig. 5 or before step S201 shown in Fig. 6.

Then, the content of the process performed in a case of setting the blowing conditions is determined based on the paper information.

In a case where the content of the process determined based on the paper information is a process of actually blowing gas onto the paper P and then setting the blowing conditions, the processes of step S101 and subsequent steps in Fig. 5 or the processes of step S201 and subsequent steps in Fig. 6 are performed.

In addition, in a case where the content of the process determined based on the paper information is a process of setting the blowing conditions without actually blowing gas onto the paper P, the default blowing conditions are set as the blowing conditions.

A case where the information specified by the paper information is the second information and the setting of the blowing conditions is performed after actually blowing gas onto the paper P is assumed. In this case, it is assumed that the accuracy of this setting is reduced.

In a case where the information specified by the paper information is the second information, the accuracy of specifying the state of the paper P based on the captured image is likely to be lower than in a case where the information specified by the paper information is the first information.

In this case, the accuracy of setting the blowing conditions may be reduced.

In addition, in a case where the information specified by the paper information is the second information and the setting of the blowing conditions is performed after actually blowing gas onto the paper P, the processing takes time, and the accuracy of the setting of the blowing conditions is difficult to improve.

Therefore, in this processing example, in a case where the information specified by the paper information is the second information, as described above, the processing is performed to set predetermined blowing conditions as the blowing conditions.

In the present exemplary embodiment, the predetermined blowing conditions are stored in the secondary storage unit 91 shown in Fig. 2. In other words, the default blowing conditions are stored in the secondary storage unit 91 shown in Fig. 2.

In a case where the information specified by the paper information is the second information, the CPU 11a reads the predetermined conditions stored in the secondary storage unit 91. Then, the CPU 11a sets the read predetermined conditions as the blowing conditions used in the formation of the image.

### [Others]

In the above description, a configuration in which the imaging unit 500, the light source 600, and the blowing device 400 are provided on both the one lateral side R1 and the other lateral side R2 has been described. Incidentally, it is not necessary to provide the imaging unit 500, the light source 600, and the blowing device 400 on both the one lateral side R1 and the other lateral side R2.

The imaging unit 500, the light source 600, and the blowing device 400 may be provided on only one of the one lateral side R1 and the other lateral side R2.

Even in a configuration in which the imaging unit 500, the light source 600, and the blowing device 400 are provided only on one side, the configurations and processes described above can be adopted.

### (Supplementary Note)

(((1))) A recording medium accommodating device comprising:
   a one-side light source that is disposed on one lateral side of a loaded recording medium and that serves as a light source for irradiating the recording medium with light;
   a one-side imaging unit that is disposed on the one lateral side and that serves as an imaging unit imaging the recording medium;
   an other-side light source that is disposed on the other lateral side of the loaded recording medium and that serves as a light source for irradiating the recording medium with light;
   an other-side imaging unit that is disposed on the other lateral side and serves as an imaging unit imaging the recording medium; and
   a processor configured to:
      set an intensity of light directed from the other-side light source to the recording medium in a case where the one-side imaging unit performs imaging to be lower than an intensity of light directed from the other-side light source to the recording medium in a case where the other-side imaging unit performs imaging.
(((2))) The recording medium accommodating device according to (((1))), wherein the processor is configured to:
   lower the intensity of the light directed from the other-side light source to the recording medium by turning off the other-side light source or reducing an output of the other-side light source.
(((3))) A recording medium accommodating device comprising:
   a one-side light source that is disposed on one lateral side of a loaded recording medium and that serves as a light source for irradiating the recording medium with light;
   a one-side imaging unit that is disposed on the one lateral side and that serves as an imaging unit imaging the recording medium;
   an other-side light source that is disposed on the other lateral side of the loaded recording medium and that serves as a light source for irradiating the recording medium with light; and
   an other-side imaging unit that is disposed on the other lateral side and serves as an imaging unit imaging the recording medium,
   wherein at least one of the one-side light source or the other-side light source is disposed in a state where an optical axis of the at least one of the one-side light source or the other-side light source is inclined with respect to a virtual straight line passing through the at least one of the one-side light source or the other-side light source and that is along a side of the loaded recording medium, the side extending from the one lateral side toward the other lateral side, and/or
   a wavelength of light emitted from the one-side light source is different from a wavelength of light emitted from the other-side light source.
(((4))) The recording medium accommodating device according to (((3))),
   wherein the virtual straight line passing through the one-side light source also passes through the other-side light source, and
   both the one-side light source and the other-side light source are provided on a light source-passing straight line that is a common virtual straight line passing through both the one-side light source and the other-side light source.
(((5))) The recording medium accommodating device according to (((4))),
   wherein both the one-side imaging unit and the other-side imaging unit are disposed on one common virtual straight line along the side, and both the one-side imaging unit and the other-side imaging unit are positioned on an imaging unit-passing straight line that is the one common virtual straight line passing through both the one-side imaging unit and the other-side imaging unit,
   in a case of comparing positions in a direction intersecting an extension direction of the imaging unit-passing straight line, a position of the imaging unit-passing straight line is different from a position of the light source-passing straight line, and
   an optical axis of at least one of the one-side light source or the other-side light source is inclined toward a side on which the imaging unit-passing straight line is positioned.
(((6))) The recording medium accommodating device according to any one of (((3))) to (((5))),
   wherein at least one of the one-side light source or the other-side light source is provided to face diagonally upward or diagonally downward.
(((7))) The recording medium accommodating device according to (((6))),
   wherein, on each of the one lateral side and the other lateral side, the light source is provided above or below the imaging unit installed on each of the one lateral side and the other lateral side, and
   the light source provided above or below the imaging unit is provided to face a side on which the imaging unit is positioned with respect to a horizontal plane passing through the virtual straight line passing through the light source.
(((8))) An image forming apparatus comprising:
   a recording medium accommodating device that accommodates a recording medium; and
   an image forming section that forms an image on the recording medium fed from the recording medium accommodating device,
   wherein the recording medium accommodating device has a configuration of the recording medium accommodating device according to any one of (((1))) to (((7))).

With the recording medium accommodating device according to (((1))), it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

With the recording medium accommodating device according to (((2))), it is possible to reduce the intensity of the light directed from the other-side light source to the one-side imaging unit by controlling the output of the other-side light source.

With the recording medium accommodating device according to (((3))), it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

With the recording medium accommodating device according to (((4))), it is easy to align conditions for irradiating the recording medium with light from the one-side light source and conditions for irradiating the recording medium with light from the other-side light source as compared with a case where neither the one-side light source nor the other-side light source is provided on the light source-passing straight line that is the common virtual straight line passing through both the one-side light source and the other-side light source.

With the recording medium accommodating device according to (((5))), it is possible to improve the quality of a captured image obtained by each of a plurality of imaging units as compared with a case where the optical axis of the one-side light source and the optical axis of the other-side light source are along the extension direction of the imaging unit-passing straight line.

With the recording medium accommodating device according to (((6))), it is possible to improve the quality of a captured image obtained by each of a plurality of imaging units as compared with a case where both the one-side light source and the other-side light source are provided to face a horizontal direction.

With the recording medium accommodating device according to (((7))), it is possible to improve the quality of a captured image obtained by each of a plurality of imaging units as compared with a case where both the one-side light source and the other-side light source are provided to face the horizontal direction.

With the image forming apparatus according to (((8))), it is possible to improve the quality of a captured image obtained by each of a plurality of imaging units as compared with a configuration in which, among respective light sources provided corresponding to a plurality of imaging units, light emitted from a light source provided corresponding to one imaging unit is likely to affect imaging of the other imaging units.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image forming apparatus
1A: image forming section
11a: CPU
200: paper accommodating device
401: one-side blowing device
402: other-side blowing device
501: one-side imaging unit
502: other-side imaging unit
601: one-side light source
601A: optical axis
602: other-side light source
602A: optical axis
810: light source-passing straight line
830: imaging unit-passing straight line
P: paper
R1: one lateral side
R2: other lateral side

## Claims

1. A recording medium accommodating device comprising:
a one-side light source that is disposed on one lateral side of a loaded recording medium and that serves as a light source for irradiating the recording medium with light;
a one-side imaging unit that is disposed on the one lateral side and that serves as an imaging unit imaging the recording medium;
an other-side light source that is disposed on the other lateral side of the loaded recording medium and that serves as a light source for irradiating the recording medium with light;
an other-side imaging unit that is disposed on the other lateral side and serves as an imaging unit imaging the recording medium; and
a processor configured to:
set an intensity of light directed from the other-side light source to the recording medium in a case where the one-side imaging unit performs imaging to be lower than an intensity of light directed from the other-side light source to the recording medium in a case where the other-side imaging unit performs imaging.

2. The recording medium accommodating device according to claim 1, wherein the processor is configured to:
lower the intensity of the light directed from the other-side light source to the recording medium by turning off the other-side light source or reducing an output of the other-side light source.

3. A recording medium accommodating device comprising:
a one-side light source that is disposed on one lateral side of a loaded recording medium and that serves as a light source for irradiating the recording medium with light;
a one-side imaging unit that is disposed on the one lateral side and that serves as an imaging unit imaging the recording medium;
an other-side light source that is disposed on the other lateral side of the loaded recording medium and that serves as a light source for irradiating the recording medium with light; and
an other-side imaging unit that is disposed on the other lateral side and serves as an imaging unit imaging the recording medium,
wherein at least one of the one-side light source or the other-side light source is disposed in a state where an optical axis of the at least one of the one-side light source or the other-side light source is inclined with respect to a virtual straight line passing through the at least one of the one-side light source or the other-side light source and that is along a side of the loaded recording medium, the side extending from the one lateral side toward the other lateral side, and/or
a wavelength of light emitted from the one-side light source is different from a wavelength of light emitted from the other-side light source.

4. The recording medium accommodating device according to claim 3,
wherein the virtual straight line passing through the one-side light source also passes through the other-side light source, and
both the one-side light source and the other-side light source are provided on a light source-passing straight line that is a common virtual straight line passing through both the one-side light source and the other-side light source.

5. The recording medium accommodating device according to claim 4,
wherein both the one-side imaging unit and the other-side imaging unit are disposed on one common virtual straight line along the side, and both the one-side imaging unit and the other-side imaging unit are positioned on an imaging unit-passing straight line that is the one common virtual straight line passing through both the one-side imaging unit and the other-side imaging unit,
in a case of comparing positions in a direction intersecting an extension direction of the imaging unit-passing straight line, a position of the imaging unit-passing straight line is different from a position of the light source-passing straight line, and
an optical axis of at least one of the one-side light source or the other-side light source is inclined toward a side on which the imaging unit-passing straight line is positioned.

6. The recording medium accommodating device according to any one of claims 3 to 5,
wherein at least one of the one-side light source or the other-side light source is provided to face diagonally upward or diagonally downward.

7. The recording medium accommodating device according to claim 6,
wherein, on each of the one lateral side and the other lateral side, the light source is provided above or below the imaging unit installed on each of the one lateral side and the other lateral side, and
the light source provided above or below the imaging unit is provided to face a side on which the imaging unit is positioned with respect to a horizontal plane passing through the virtual straight line passing through the light source.

8. An image forming apparatus comprising:
a recording medium accommodating device that accommodates a recording medium; and
an image forming section that forms an image on the recording medium fed from the recording medium accommodating device,
wherein the recording medium accommodating device has a configuration of the recording medium accommodating device according to any one of claims 1 to 7.

## Amended claims

### Amended claims in accordance with Rule 137(2) EPC.

1. A recording medium accommodating device (200) comprising:
a one-side light source (601) that is disposed on one lateral side (R1) of a loaded recording medium (P) and that serves as a light source for irradiating the recording medium (P) with light;
a one-side imaging unit (501) that is disposed on the one lateral side (R1) and that serves as an imaging unit imaging the recording medium (P);
an other-side light source (602) that is disposed on the other lateral side (R2) of the loaded recording medium (P) and that serves as a light source for irradiating the recording medium (P) with light; and
an other-side imaging unit (502) that is disposed on the other lateral side (R2) and serves as an imaging unit imaging the recording medium (P),
wherein at least one of the one-side light source (601) or the other-side light source (602) is disposed in a state where an optical axis (601A, 601B) of the at least one of the one-side light source (601) or the other-side light source (602) is inclined with respect to a virtual straight line (801) passing through the at least one of the one-side light source (601) or the other-side light source (602) and that is along a side (118) of the loaded recording medium (P), the side (118) extending from the one lateral side (R1) toward the other lateral side (R2),
**characterized in that**
the virtual straight line (801) passing through the one-side light source (601) also passes through the other-side light source (602), and
both the one-side light source (601) and the other-side light source (602) are provided on a light source-passing straight line (810) that is a common virtual straight line (801) passing through both the one-side light source (601) and the other-side light source (602).

2. The recording medium accommodating device (200) according to claim 1,
wherein both the one-side imaging unit (501) and the other-side imaging unit (502) are disposed on one common virtual straight line (802) along the side (118), and both the one-side imaging unit (501) and the other-side imaging unit (502) are positioned on an imaging unit-passing straight line (830) that is the one common virtual straight line (802) passing through both the one-side imaging unit (501) and the other-side imaging unit (502),
in a case of comparing positions in a direction intersecting an extension direction of the imaging unit-passing straight line (830), a position of the imaging unit-passing straight line (830) is different from a position of the light source-passing straight line (810), and
the optical axis (601A, 601B) of at least one of the one-side light source (601) or the other-side light source (602) is inclined toward a side on which the imaging unit-passing straight line (830) is positioned.

3. The recording medium accommodating device (200) according to claim 1 or 2,
wherein at least one of the one-side light source (601) or the other-side light source (602) is provided to face diagonally upward or diagonally downward.

4. The recording medium accommodating device (200) according to claim 3,
wherein, on each of the one lateral side (R1) and the other lateral side (R2), the light source (601, 602) is provided above or below the imaging unit (501, 502) installed on each of the one lateral side (R1) and the other lateral side (R2), and
the light source (601, 602) provided above or below the imaging unit (501, 502) is provided to face a side on which the imaging unit (501, 502) is positioned with respect to a horizontal plane (H1, H2) passing through the virtual straight line (801) passing through the light source (601, 602).

5. An image forming apparatus (1) comprising:
a recording medium accommodating device (200) that accommodates a recording medium (P); and
an image forming section (1A) that forms an image on the recording medium (P) fed from the recording medium accommodating device (200),
wherein the recording medium accommodating device (200) has a configuration of the recording medium accommodating device (200) according to any one of claims 1 to 4.
